# EUROPÄISCHE PATENTANMELDUNG

(11) **EP 0 757 053 A2**
(43) Veröffentlichungstag der Anmeldung: **05.02.1997**
(21) Anmeldenummer: 96111891.6
(22) Anmeldetag: 24.07.1996
(51) Int. Cl.: C07F 17/00, C08F 10/00, C08F 4/64

(54) **Metallocenverbindung**

(30) Priorität: 28.07.1995 DE 19527652
(71) Anmelder: HOECHST AKTIENGESELLSCHAFT, 65929 Frankfurt am Main (DE)
(72) Erfinder: Aulbach, Michael, Dr., 65719 Hofheim (DE); Herrmann, Hans-Friedrich, Dr., 64521 Dornheim (DE); Bilda, Dieter, Dr., 65926 Frankfurt (DE); Bingel, Carsten, Dr., 65830 Kriftel (DE)

(57) **Zusammenfassung**

Die vorliegende Erfindung betrifft eine Metallocenverbindung der Formel I 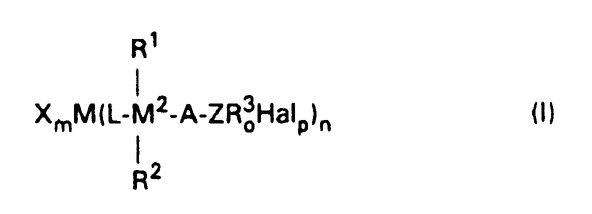 ,worin
- M: ein Metall der Gruppe IVb, Vb oder VIb des Periodensystems der Elemente ist,
- X: gleich oder verschieden sind und ein Wasserstoffatom, ein Halogenatom oder einen C₁-C₄₀-kohlenstoffhaltigen Rest wie C₁-C₁₀-Alkyl, C₁-C₁₀-Alkoxy, C₆-C₁₄-Aryl, C₆-C₁₄-Aryloxy, C₂-C₁₀-Alkenyl, C₇-C₄₀-Arylalkyl, C₇-C₄₀-Alkylaryl, C₈-C₄₀-Arylalkenyl, OR⁴ oder NR⁴₂ bedeuten, worin R⁴ gleich oder verschieden ein C₁-C₂₀-Kohlenwasserstoffrest wie C₁-C₁₀Alkyl oder C₆-C₁₄-Aryl sind,
- m: gleich 1, 2 oder 3 ist,
- n: gleich 1 oder 2 ist,
- L: gleich oder verschieden ein π-Ligand sind, der an das Zentralatom M koordiniert,
- M²: gleich oder verschiedene in Siliciumatom, ein Germaniumatom oder ein Zinnatom sind,
- R¹: gleich oder verschieden ein C₁-C₂₀-kohlenstoffhaltiger Rest sind,
- R²: gleich oder verschieden ein C₁-C₂₀-kohlenstoffhaltiger Rest sind, oder ein π-Ligand ist, der an das Zentralatom M koordiniert,
- A: gleich oder verschieden eine zweizähnige C₁-C₄₀-Kohlenwasserstoffgruppe sind,
- Z: gleich oder verschieden ein Boratom, ein Siliciumatom, ein Germaniumatom oder ein Zinnatom sind,
- R³: gleich oder verschieden ein Wasserstoffatom oder ein C₁-C₂₀-kohlenstoffhaltiger Rest sind,
- o: gleich Null, 1 oder 2 ist,
- Hal: gleich oder verschieden ein Halogenatom ist, und
- p: gleich 1, 2 oder 3 ist,
wobei falls R² ein π-Ligand ist, der an das Zentralatom M koordiniert, n gleich 1 ist und falls R² ein C₁-C₂₀-kohlenstoffhaltiger Rest ist, n gleich 2 ist.

Die erfindungsgemäße Metallocenverbindung eignet sich zur Olefinpolymerisation.

## Beschreibung

Die vorliegende Erfindung bezieht sich auf eine Metallocenverbindung, die sich als Katalysatorkomponente zur Olefinpolymerisation eignet. Die Erfindung bezieht sich außerdem auf einen geträgerten Katalysator, welcher die erfindungsgemäße Metallocenverbindung enthält. Außerdem bezieht sich die Erfindung auf ein Verfahren zur Herstellung eines Polyolefins unter Verwendung der erfindungsgemäßen Metallocenverbindung.

Metallocenverbindungen, insbesondere der 4. Nebengruppe des Periodensystems der Elemente eignen sich in Gegenwart von Cokatalysatoren, wie Aluminoxanen, zur Polymerisation von Olefinen (EP 129 368; EP-A 185 918; EP-A 283 739). Die Metallocenverbindungen enthalten π-Liganden wie Cyclopentadienylgruppen, die an das Übergangsmetall koordinieren. Sie sind in der homogenen Katalyse sehr aktiv, ergeben jedoch Polymerisate mit einer schlechten Polymermorphologie. Ein weiterer Nachteil bei der Verwendung homogener (d.h. löslicher) Metallocen-Aluminoxan-Katalysatorsysteme in Verfahren, bei denen das gebildete Polymer als Feststoff anfällt, ist die Ausbildung starker Beläge an Reaktorwänden und Rührer. Diese Beläge entstehen durch Agglomeration der Polymerpartikel, wenn das Metallocen oder der Cokatalysator, oder beide gelöst im Suspensionsmedium vorliegen. Derartige Beläge in den Reaktoren müssen regelmäßig entfernt werden, da diese rasch erhebliche Stärken erreichen, eine hohe Festigkeit besitzen und den Wärmeaustausch zum Kühlmedium verhindern.

Zur Vermeidung von Reaktorbelägen und zur Verbesserung der Produktmorphologie können Metallocene geträgert werden (EP 206 794; EP 294 942; EP 295 312; EP 279 863; EP 285 443). Diese geträgerten Katalysatorsysteme sind indessen wenig aktiv und die Metallocenkomponenten sind häufig nicht ausreichend fest auf dem Träger verankert und können somit während der Polymerisation von heißem Suspensionsmittel extrahiert werden.

In EP 293 815 werden unverbrückte Metallocene mit siloxansubstituierten, halogenfreien Cyclopentadienylliganden beschrieben, die durch Umsetzung mit einem hydroxylgruppenhaltigen Trägermaterial geträgert werden. Nachteil dieses Katalysators ist, das benötigte hohe Verhältnis von Metallocen-Verbindung zu Trägermaterial, da das Metallocen nur unvollständig auf dem Träger fixiert wird. Ein weiterer Nachteil dieser Metallocene ist die eingeschränkte Synthesevielfalt, da der Siloxan-Substituent bereits vor der Komplexierung des Zentralatoms in den Cyclopentadienylring eingeführt wird.

In JO 1259004 sind unverbrückte Metallocene beschrieben, welche als Substituenten am Cyclopentadienylring über eine Alkylenkette gebundene R₃Si-Gruppen tragen. Diese R₃Si-Gruppen sind in der Lage (wie in EP 293 815 beschrieben) an hydroxylgruppenhaltige Träger zu binden. Metallocene mit halogenhaltigen R₃Si-Gruppen sind über den dort beschriebenen Syntheseweg nicht zugänglich.

Es bestand die Aufgabe, eine Metallocenverbindung zur Verfügung zu stellen, welche die Nachteile des Standes der Technik vermeidet und insbesondere eine bessere Fixierung auf dem Trägermaterial gewährleistet und/oder keine Beeinflussung der Polymerisationseigenschaften hervorruft.

Es wurde nun gefunden, daß diese Nachteile vermieden werden können, durch eine spezielle Metallocenverbindung.

Die vorliegende Erfindung betrifft somit eine Metallocenverbindung der Formel I 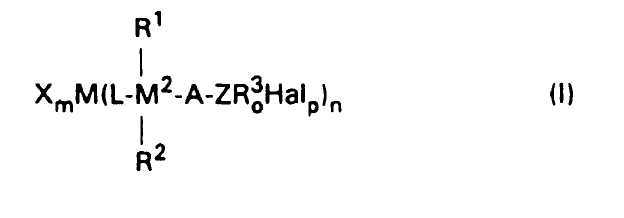 ,worin
- M: ein Metall der Gruppe IVb, Vb oder VIb des Periodensystems der Elemente ist,
- X: gleich oder verschieden sind und ein Wasserstoffatom, ein Halogenatom oder einen C₁-C₄₀-kohlenstoffhaltigen Rest wie C₁-C₁₀-Alkyl, C₁-C₁₀-Alkoxy, C₆-C₁₄-Aryl, C₆-C₁₄-Aryloxy, C₂-C₁₀-Alkenyl, C₇-C₄₀-Arylalkyl, C₇-C₄₀-Alkylaryl, C₈-C₄₀-Arylalkenyl, OR⁴ oder NR⁴₂ bedeuten, worin R⁴ gleich oder verschieden ein C₁-C₂₀-Kohlenwasserstoffrest wie C₁-C₁₀Alkyl oder C₆-C₁₄-Aryl sind,
- m: gleich 1, 2 oder 3 ist,
- n: gleich 1 oder 2 ist,
- L: gleich oder verschieden ein π-Ligand sind, der an das Zentralatom M koordiniert,
- M²: gleich oder verschiedene in Siliciumatom, ein Germaniumatom oder ein Zinnatom sind,
- R¹: gleich oder verschieden ein C₁-C₂₀-kohlenstoffhaltiger Rest sind,
- R²: gleich oder verschieden ein C₁-C₂₀-kohlenstoffhaltiger Rest sind, oder ein π-Ligand ist, der an das Zentralatom M koordiniert,
- A: gleich oder verschieden eine zweizähnige C₁-C₄₀-Kohlenwasserstoffgruppe sind,
- Z: gleich oder verschieden ein Boratom, ein Siliciumatom, ein Germaniumatom oder ein Zinnatom sind,
- R³: gleich oder verschieden ein Wasserstoffatom oder ein C₁-C₂₀-kohlenstoffhaltiger Rest sind,
- o: gleich Null, 1 oder 2 ist,
- Hal: gleich oder verschieden ein Halogenatom ist, und
- p: gleich 1, 2 oder 3 ist,
wobei falls R² ein π-Ligand ist, der an das Zentralatom M koordiniert, n gleich 1 ist und falls R² ein C₁-C₂₀-kohlenstoffhaltiger Rest ist, n gleich 2 ist.

π-Liganden sind bevorzugt eine unsubstituierte Cyclopentadienylgruppe oder substituierte Cyclopentadienylgruppen, die als Reste bevorzugt einen oder mehrere C₁-C₃₀-Kohlenwasserstoffreste tragen, z.B. 2-Methylcyclopentadienyl, Methyl-tert.-butylcyclopentadienyl, tert.-Butylcyclopentadienyl, Isopropylcyclopentadienyl, Dimethylcyclopentadienyl, Trimethylcyclopentadienyl, 5-Phenylcyclopentadienyl, Diphenylcyclopentadienyl, Indenyl, 2-Methylindenyl, 2-Ethylindenyl, 3-Methylindenyl, 3-tert.-Butylindenyl, 2-Methyl-4-phenylindenyl, 2-Ethyl-4-phenylindenyl, 2-Methyl-4-naphthylindenyl, 2-Methyl-4-isopropylindenyl, Benzoindenyl, 2-Methyl-4,5-benzoindenyl, 2-Methyl-α-acenaphthindenyl, 2-Methyl-4,6-di-isopropylindenyl, Fluorenyl, 4-Methylfluorenyl oder 2,7-Di-tert.-butylfluorenyl. Besonders bevorzugt sind Indenylderivate. Bevorzugt tragen die Indenylderivate am Fünfring, insbesondere in 2-Position, einen C₁-C₁₀-Kohlenwasserstoffrest wie C₁-C₁₀-Alkyl und sind am Sechsring entweder unsubstituiert oder tragen einen oder mehrere C₁-C₂₀-Kohlenwasserstoffreste wie C₁-C₁₀-Alkyl, C₆-C₂₀-Aryl (z.B. Phenyl oder Naphthyl) oder zwei oder mehr der C₁-C₂₀-Kohlenwasserstoffreste bilden ein Ringsystem.

Wenn R¹, R² und R³ C₁-C₄₀-kohlenstoffhaltige Reste sind, können diese gesättigt oder ungesättigt, linear, cyclisch oder verzweigt sein, z.B. eine C₁-C₂₀-Alkyl-, eine C₁-C₂₀-Halogenalkyl, eine C₆-C₂₀-Aryl-, eine C₆-C₂₀-Halogenaryl-, eine C₂-C₄₀-Alkenyl-, eine C₇-C₄₀-Arylalkyl-, eine C₇-C₄₀-Alkylaryl- oder eine C₈-C₄₀-Arylalkenylgruppe, die Silizium, Germanium, Zinn, Sauerstoff, Stickstoff, Schwefel oder Phosphor enthalten können, z.B. eine (Tri(C₁-C₁₀)-alkyl)silyl-C₁-C₂₀-Alkyl-Gruppe.

Die zweizähnigen C₁-C₄₀-Kohlenwasserstoffgruppen A können gesättigt oder ungesättigt, linear, cyclisch oder verzweigt sein, z.B. eine C₁-C₂₀-Alkylen-, eine C₆-C₂₀-Arylen, eine C₂-C₂₀-Alkenylen, eine C₇-C₄₀-Arylalkylen-, eine C₇-C₄₀-Alkylarylen- oder eine C₈-C₄₀-Arylalkenylengruppe.

Die Metallocene der Formel I können unverbrückt (wenn n gleich 2 ist) oder verbrückt (wenn n gleich 1 ist) sein.

Bevorzugt sind verbrückte Metallocene der Formel I worin
- M: ein Metall der Gruppe IVb des Periodensystems der Elemente wie Titan, Zirkonium oder Hafnium ist,
- X: gleich oder verschieden ein Halogenatom oder C₁-C₁₀-Alkyl sind,
- m: gleich 2 ist,
- n: gleich 1 ist,
- L: eine substituierte oder unsubstituierte Cyclopentadienylgruppe ist, die an das Zentralatom M koordiniert,
- M²: ein Siliciumatom ist,
- R¹: gleich C₁-C₁₀-Alkyl ist,
- R²: eine substituierte oder unsubstituierte Cyclopentadienylgruppe ist, die an das Zentralatom M koordiniert,
- A: eine C₁-C₁₀-Alkylengruppe ist,
- Z: ein Siliciumatom ist,
- R³: gleich oder verschieden C₁-C₁₀-Alkyl oder C₆-C₁₄-Aryl sind,
- o: gleich 0, 1 oder 2, bevorzugt 2 ist,
- Hal: ein Chloratom sind,
- p: gleich 1, 2 oder 3, bevorzugt 1 ist.

Besonders bevorzugt sind verbrückte Metallocene der Formel I, worin L und R² gleich sind.

Beispiele der erfindungsgemäßen Metallocene sind:
(4-Trichlorsilyl-n-butyl)(methyl)silandiyl[bis(2-methylindenyl)]titandichlorid
(4-Trichlorsilyl-n-butyl)(methyl)silandiyl[bis(2-methylindenyl)]ziconiumdichlorid
(4-Trichlorsilyl-n-butyl)(methyl)silandiyl[bis(2-methylindenyl)]hafniumdichlorid
(4-Trichlorsilyl-n-butyl)(methyl)silandiyl[bis(2-methylindenyl)]ziconiumdichlorid
(4-Trichlorsilyl-n-butyl)(ethyl)silandiyl[bis(2-methylindenyl)]ziconiumdichlorid
(4-Trichlorsilyl-n-butyl)(phenyl)silandiyl[bis(2-methylindenyl)]ziconiumdichlorid
(4-Trichlorsilyl-n-butyl)(methyl)silandiyl[bis(2-methyl-4,5-benzoindenylindenyl)]ziconiumdichlorid
(4-Trichlorsilyl-n-butyl)(methyl)silandiyl[bis(2-methyl-4-phenyl-indenyl)]ziconiumdichlorid
(4-Trichlorsilyl-n-butyl)(methyl)silandiyl[bis(2-ethyl-4-phenyl-indenyl)]ziconiumdichlorid
(4-Trichlorsilyl-n-butyl)(methyl)silandiyl[bis(2-methyl-4-naphthyl-indenyl)]ziconiumdichlorid

(3-Trichlorsilyl-n-propyl)(methyl)silandiyl[bis(2-methylindenyl)]ziconiumdichlorid
(3-Trichlorsilyl-n-propyl)(ethyl)silandiyl[bis(2-methylindenyl)]ziconiumdichlorid
(3-Trichlorsilyl-n-propyl)(phenyl)silandiyl[bis(2-methylindenyl)]ziconiumdichlorid
(3-Trichlorsilyl-n-propyl)(methyl)silandiyl[bis(2-methyl-4,5-benzoindenyl-indenyl) ]-ziconiumdichlorid
(3-Trichlorsilyl-n-propyl)(methyl)silandiyl[bis(2-methyl-4-phenyl-indenyl)]ziconiumdichlorid
(3-Trichlorsilyl-n-propyl)(methyl)silandiyl[bis(2-ethyl-4-phenyl-indenyl)]ziconiumdichlorid
(3-Trichlorsilyl-n-propyl)(methyl)silandiyl[bis(2-methyl-4-naphthyl-indenyl)]ziconiumdichlorid

(3-Trichlorsilyl-n-propyl)(methyl)silandiyl[(2-methylindenyl)(2-methyl-4,5-benzoindenyl-indenyl)]ziconiumdichlorid
(3-Trichlorsilyl-n-propyl)(methyl)silandiyl[(2-methylindenyl)(2-methyl-4-phenyl-indenyl)]-ziconiumdichlorid
(3-Trichlorsilyl-n-propyl)(methyl)silandiyl[(2-methylindenyl)(2-ethyl-4-phenyl-indenyl)]ziconiumdichlorid
Bis(4-Trichlorsilyl-n-butyl)silandiyl[bis(4,5,6,7 tetrahydroindenyl)]ziconiumdichlorid
Bis(4-Trichlorsilyl-n-butyl)silandiyl[bis(2-methy-4,6-diisopropylindenyl)]ziconiumdichlorid
Bis(4-Trichlorsilyl-n-butyl)silandiyl[bis(2-methylindenyl)]ziconiumdichlorid
Bis(4-Trichlorsilyl-n-butyl)silandiyl[bis(2-methyl-4,5-benzoindenyl-indenyl)]ziconiumdichlorid
Bis(4-Trichlorsilyl-n-butyl)silandiyl[bis(2-methyl-4-phenyl-indenyl)]ziconiumdichlorid
Bis(4-Trichlorsilyl-n-butyl)silandiyl[bis(2-ethyl-4-phenyl-indenyl)]ziconiumdichlorid
Bis(4-Trichlorsilyl-n-butyl)silandiyl[bis(2-methyl-4-naphthyl-indenyl)]ziconiumdichlorid

Bis(3-Trichlorsilyl-n-propyl)silandiyl[bis(4,5,6,7 tetrahydroindenyl]ziconiumdichlorid
Bis(3-Trichlorsilyl-n-propyl)silandiyl[bis(2-methyl-4,6-diisopropylindenyl)]ziconiumdichlorid
Bis(3-Trichlorsilyl-n-propyl)silandiyl[bis(2-methylindenyl)]ziconiumdichlorid
Bis(3-Trichlorsilyl-n-propyl)silandiyl[bis(2-methyl-4,5-benzoindenyl-indenyl)]ziconiumdichlorid
Bis(3-Trichlorsilyl-n-propyl)silandiyl[bis(2-methyl-4-phenyl-indenyl)]ziconiumdichlorid
Bis(3-Trichlorsilyl-n-propyl)silandiyl[bis(2-ethyl-4-phenyl-indenyl)]ziconiumdichlorid
Bis(3-Trichlorsilyl-n-propyl)silandiyl(bis(2-methyl-4-naphthyl-indenyl)]ziconiumdichlorid
Bis(8-Trichlorsilyl-n-octyl)silandiyl[bis(4,5,6,7 tetrahydroindenyl]ziconiumdichlorid
Bis(8-Trichlorsilyl-n-octyl)silandiyl[bis(2-methyl-4,6-diisopropylindenyl)]ziconiumdichlorid
Bis(8-Trichlorsilyl-n-octyl)silandiyl[bis(2-methylindenyl)]ziconiumdichlorid
Bis(8-Trichlorsilyl-n-octyl)silandiyl[bis(2-methyl-4,5-benzoindenyl-indenyl)]ziconiumdichlorid
Bis(8-Trichlorsilyl-n-octyl)silandiyl[bis(2-methyl-4-phenyl-indenyl)]ziconiumdichlorid
Bis(8-Trichlorsilyl-n-octyl)silandiyl[bis(2-ethyl-4-phenyl-indenyl)]ziconiumdichlorid
Bis(8-Trichlorsilyl-n-octyl)silandiyl[bis(2-methyl-4-naphthyl-indenyl)]ziconiumdichlorid

Dimethylsilandiyl[(2-methylindenyl)(2-(4*'*-trichlorsilan-n-butyl)-indenyl)]ziconiumdichlorid
Dimethylsilandiyl[(2-methylindenyl)(3-(4*'*-trichlorsilan-n-butyl)-indenyl)]ziconiumdichlorid
Dimethylsilandiyl[(2-methylindenyl)(4-(4*'*-trichlorsilan-n-butyl)-indenyl)]ziconiumdichlorid
Dimethylsilandiyl[(2-methylindenyl)(5-(4*'*-trichlorsilan-n-butyl)-indenyl)]ziconiumdichlorid
Dimethylsilandiyl[(2-methylindenyl)(6-(4*'*-trichlorsilan-n-butyl)-indenyl)]ziconiumdichlorid
Dimethylsilandiyl[(2-methylindenyl)(7-(4*'*-trichlorsilan-n-butyl)-indenyl)]ziconiumdichlorid

Diphenylsilandiyl[(2-methylindenyl)(2-(4*'*-trichlorsilan-n-butyl)-indenyl)]ziconiumdichlorid
Diphenylsilandiyl[(2-methylindenyl)(3-(4*'*-trichlorsilan-n-butyl)-indenyl)]ziconiumdichlorid
Diphenylsilandiyl[(2-methylindenyl)(4-(4*'*-trichlorsilan-n-butyl)-indenyl)]ziconiumdichlorid
Diphenylsilandiyl[(2-methylindenyl)(5-(4*'*-trichlorsilan-n-butyl)-indenyl)]ziconiumdichlorid
Diphenylsilandiyl[(2-methylindenyl)(6-(4*'*-trichlorsilan-n-butyl)-indenyl)]ziconiumdichlorid
Diphenylsilandiyl[(2-methylindenyl)(7-(4*'*-trichlorsilan-n-butyl)-indenyl)]ziconiumdichlorid

Dimethylsilandiyl[(2-methyl-4-phenyl-indenyl)(2-(4*'*-trichlorsilan-n-butyl)-indenyl)]ziconiumdichlorid
Dimethylsilandiyl[(2-methyl-4-phenyl-indenyl)(3-(4*'*-trichlorsilan-n-butyl)-indenyl)]ziconiumdichlorid
Dimethylsilandiyl[(2-methyl-4-phenyl-indenyl)(4-(4*'*-trichlorsilan-n-butyl)-indenyl)]ziconiumdichlorid
Dimethylsilandiyl[(2-methyl-4-phenyl-indenyl)(5-(4*'*-trichlorsilan-n-butyl)-indenyl)]ziconiumdichlorid
Dimethylsilandiyl[(2-methyl-4-phenyl-indenyl)(6-(4*'*-trichlorsilan-n-butyl)-indenyl)]ziconiumdichlorid
Dimethylsilandiyl[(2-methyl-4-phenyl-indenyl)(7-(4*'*-trichlorsilan-n-butyl)-indenyl)]ziconiumdichlorid

[Cyclopentadienyl][(dimethylchlorsilyl-n-butyl-dimethylsilyl)-cyclopentadienyl]zirconiumdichlorid
[Cyclopentadienyl][(trichlorsilyl-n-butyl-dimethylsilyl)-cyclopentadienyl]zirconiumdichlorid
[Methyl-cyclopentadienyl][(dimethylchlorsilyl-n-butyl-dimethylsilyl)-cyclopentadienyl]zirconiumdichlorid
[Cyclopentadienyl][(dimethylchlorsilyl-n-octyl-dimethylsilyl)-cyclopentadienyl]zirconiumdichlorid
[Cyclopentadienyl][(dimethylchlorsilyl-n-butyl-dimethylsilyl)-cycopentadienyl]zirconiumdimethyl
[Cyclopentadienyl][(dimethylchlorsilyl-n-butyl-dimethylsilyl)-cyclopentadenyl]zirconiumdibenzyl
[Cyclopentadienyl][(dimethylchlorsilyl-n-butyl-dimethylsilyl)-cyclopentadienyl]zirconiumdiphenyl
[Indenyl][(dimethylchlorsilyl-n-butyl-dimethylsilyl)-cyclopentadienyl]zirconiumdichlorid

Bis[(dimethylchlorsilyl-n-butyl-dimethylsilyl)-cyclopentadienyl]zirconiumdichlorid
Bis[(trichlorsilyl-n-butyl-dimethylsilyl)-cyclopentadienyl]zirconiumdichlorid
Bis[(dimethylchlorsilyl-n-butyl-dimethylsilyl)-cyclopentadienyl]zirconiumdichlorid
Bis[(dimethylchlorsilyl-n-octyl-dimethylsilyl)-cyclopentadienyl]zirconiumdichlorid
Bis[(dimethylchlorsilyl-n-butyl-dimethylsilyl)-cyclopentadienyl]zirconiumdimethyl
Bis[(dimethylchlorsilyl-n-butyl-dimethylsilyl)-cyclopentadienyl]zirconiumdibenzyl
Bis[(dimethylchlorsilyl-n-butyl-dimethylsilyl)-cyclopentadienyl]zirconiumdiphenyl
Bis[(dimethylchlorsilyl-n-butyl-dimethylsilyl)-cyclopentadienyl]zirconiumdichlorid
Dimethylsilandiyl[bis(2-(4*'*-trichlorsilan-n-butyl)-indenyl)]ziconiumdichlorid
Dimethylsilandiyl[bis(3-(4*'*-trichlorsilan-n-butyl)-indenyl)]ziconiumdichlorid
Dimethylsilandiyl[bis(4-(4*'*-trichlorsilan-n-butyl)-indenyl)]ziconiumdichlorid
Dimethylsilandiyl[bis(5-(4*'*-trichlorsilan-n-butyl)-indenyl)]ziconiumdichlorid
Dimethylsilandiyl[bis(6-(4*'*-trichlorsilan-n-butyl)-indenyl)]ziconiumdichlorid
Dimethylsilandiyl[bis(7-(4*'*-trichlorsilan-n-butyl)-indenyl)]ziconiumdichlorid
Dimethylsilandiyl[(2-methylindenyl)(2-(4*'*-trichlorsilan-n-butyl)-indenyl)]ziconiumdichlorid

Die Metallocene der Formel I können hergestellt werden durch Addition von Verbindungen der Formel HZR³ₒHalₚ, an Metallocene, welche eine doppelbindungshaltige Gruppe als Substituent tragen. Metallocene mit ungesättigten Substituenten und ihre Herstellung sind bekannt (Organometallics 1993, Band 2, Seiten 2140-2151; C.R. Acad. Sci. Paris, Band 284, Seiten 323-325; EP 372 414; EP 586 168; EP 647 650; DE 4 100 761). Die Umsetzung von Metallocenen, die als Substituent eine Doppelbindung haben, mit Poly(methylhydrogensiloxan) ist in EP 372 414 beschrieben.

Die vorliegende Erfindung betrifft auch ein Verfahren zur Herstellung eines Polyolefins durch Polymerisation mindestens eines Olefins in Gegenwart eines Katalysators` welcher mindestens eine Metallocenverbindung der Formel I und mindestens einen Cokatalysator enthält. Unter dem Begriff Polymerisation wird eine Homopolymerisation wie auch eine Copolymerisation verstanden.

Bevorzugt werden Olefine der Formel R^{a}-CH = CH-R^{b} homo- oder copolymerisiert, worin R^{a} und R^{b} gleich oder verschieden sind und ein Wasserstoffatom oder einen Kohlenwasserstoffrest mit 1 bis 20 C-Atomen, insbesondere 1 bis 10 C-Atome, bedeuten, oder R^{a} und R^{b} zusammen mit den sie verbindenden Atomen einen oder mehrere Ringe bilden. Beispiele für solche Olefine sind 1-Olefine wie Ethylen, Propylen, 1-Buten, 1-Penten, 1-Hexen, 4-Methyl-1-penten oder 1-Octen, Styrol, Diene wie 1,3-Butadien oder 1,4-Hexadien und cyclische Olefine wie Norbornen, Tetracyclododecen, Norbornadien oder Vinylnorbornen. Bevorzugt werden in dem erfindungsgemäßen Verfahren Ethylen oder Propylen homopolymerisiert, oder Ethylen mit einem oder mehreren 1-Olefinen mit 3 bis 20 C-Atomen, wie Propylen, und/oder einem oder mehreren Dienen mit 4 bis 20 C-Atomen, wie 1,4-Butadien, copolymerisiert. Beispiele solcher Copolymere sind Ethylen/Propylen-Copolymere und Ethylen/Propylen/1,4-Hexadien-Copolymere.

Die Polymerisation wird bevorzugt bei einer Temperatur von -60 bis 250°C, besonders bevorzugt 50 bis 200°C, durchgeführt. Der Druck beträgt bevorzugt 0,5 bis 2000 bar, besonders bevorzugt 5 bis 64 bar.

Die Polymerisation kann in Lösung, in Masse, Suspension oder in der Gasphase, kontinuierlich oder diskontinuierlich, ein- oder mehrstufig durchgeführt werden.

Eine bevorzugte Ausführungsform ist die Gasphasenpolymerisation.

Bevorzugt enthält der in dem erfindungsgemäßen Verfahren eingesetzte Katalysator eine Metallocenverbindung der Formel I. Es können auch Mischungen zweier oder mehrerer Metallocenverbindungen der Formel I, oder Mischungen von Metallocenverbindungen der Formel I mit anderen Metallocenen, Halbsandwichverbindungen oder klassischen Ziegler-Natta-Katalysatoren eingesetzt werden, z.B. zur Herstellung von Polyolefinen mit breiter oder multimodaler Molmassenverteilung.

Die Metallocene der Formel I werden bevorzugt als Racemat eingesetzt. Verwendet werden kann aber auch das reine Enantiomere in der (+)- oder (-)-Form. Mit den reinen Enantiomeren ist ein optisch aktives Polymer herstellbar. Abgetrennt werden sollte jedoch die meso-Form der Metallocene, da das polymerisationsaktive Zentrum (das Metallatom) in diesen Verbindungen wegen der Spiegelsymmetrie am Zentralmetallatom nicht mehr chiral ist und daher kein hochisotaktisches Polymeres erzeugen kann. Wird die meso-Form nicht abgetrennt, entsteht neben isotaktischen Polymeren auch ataktisches Polymer. Für bestimmte Anwendungen, beispielsweise weiche Formkörper, kann dies durchaus wünschenswert sein.

Erfindungsgemäß wird mindestens ein Cokatalysator eingesetzt, der bevorzugt eine Aluminiumverbindung und/oder eine Borverbindung ist. Bevorzugt ist als Aluminiumverbindung ein Aluminoxan, insbesondere der Formel IIa für den linearen Typ und/oder der Formel IIb für den cyclischen Typ 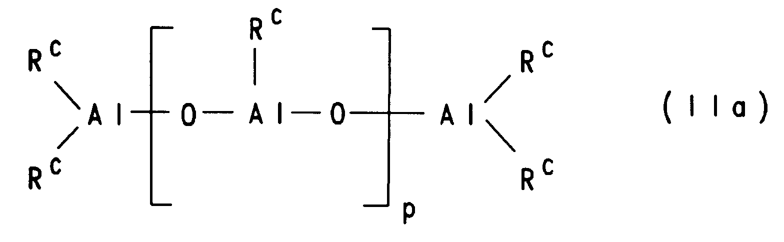 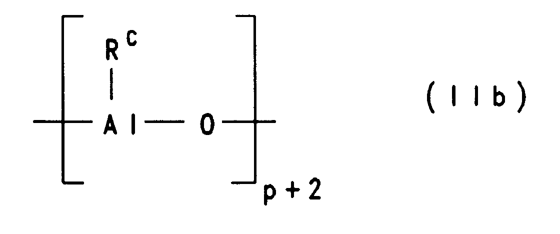 wobei in den Formeln Iia und Iib die Reste R^{C} gleich oder verschieden sein können und Wasserstoff oder eine C₁-C₂₀-Kohlenwasserstoffgruppe wie eine C₁-C₆- Alkylgrupppe, eine C₆-C₁₈-Arylgruppe oder Benzyl bedeuten, und p eine ganze Zahl von 2 bis 50, bevorzugt 10 bis 35 bedeutet.

Bevorzugt sind die Reste R^{C} gleich und bedeuten Methyl, Ethyl, Isobutyl, Phenyl oder Benzyl, besonders bevorzugt Methyl.

Sind die Reste R^{C} verschieden, so sind sie bevorzugt Methyl und Wasserstoff oder alternativ Methyl und Isobutyl, wobei Wasserstoff oder Isobutyl bevorzugt zu 0,01 bis 40% (Zahl der Reste R^{C}) enthalten sind.

Das Aluminoxan kann auf verschiedene Arten nach bekannten Verfahren hergestellt werden. Eine der Methoden ist beispielsweise, daß eine Aluminiumkohlenwasserstoffverbindung und/oder ein Hydridoaluminiumkohlenwasserstoffverbindung mit Wasser (gasförmig, fest, flüssig oder gebunden - beispielsweise als Kristallwasser) in einem inerten Lösungsmittel (wie beispielsweise Toluol) umgesetzt wird. Zur Herstellung eines Aluminoxans mit verschiedenen Resten R^{C} werden beispielsweise entsprechend der gewünschten Zusammensetzung zwei verschiedene Aluminiumtrialkyle mit Wasser umgesetzt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, das (geträgerte) Metallocen vor dem Einsatz in der Polymerisationsreaktion mit dem Cokatalysator, z.B. einem Aluminoxan vorzuaktivieren. Dadurch wird die Polymerisationsaktivität deutlich erhöht und die Kornmorphologie verbessert. Die Voraktivierung der Übergangsmetallverbindung wird in Suspension vorgenommen. Bevorzugt wird dabei das (geträgerte) Metallocen zu einer Lösung des Aluminoxans in einem inerten Kohlenwasserstoff gegeben. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösungsmenge. Das Metallocen kann in der gleichen Konzentration eingesetzt werden, vorzugsweise wird es jedoch in einer Menge von 10⁻⁴ - 1 mol pro mol Aluminoxan eingesetzt. Die Voraktivierung beträgt 5 Minuten bis 60 Stunden, vorzugsweise 5 bis 60 Minuten. Man arbeitet bei einer Temperatur von -78 bis 100°C, vorzugsweise 0 bis 70°C.

Erfindungsgemäß können auch Borverbindungen, insbesondere der Formeln R^{d}ₓNH₄₋ₓBR^{e}₄, R^{d}ₓPH₄₋ₓBR^{e}₄, R^{d}₃CBR^{e}₄, BR^{e}₃ als Cokatalysatoren verwendet werden. In diesen Formeln bedeutet x eine Zahl von 1 bis 4, bevorzugt 3, die Reste R^{d} sind gleich oder verschieden, bevorzugt gleich, und bedeuten C₁-C₁₀-Alkyl, C₆-C₁₈-Aryl oder 2 Reste R^{d} bilden zusammen mit dem sie verbindenden Atom einen Ring, und die Reste R^{e} sind gleich oder verschieden, bevorzugt gleich, und stehen für C₆-C₁₈-Aryl, das durch Alkyl, Haloalkyl oder Fluor substituiert sein kann.
Insbesondere steht R^{d} für Ethyl, Propyl, Butyl oder Phenyl und R^{e} für Phenyl, Pentafluorphenyl, 3,5-Bistrifluormethylphenyl, Mesityl, Xylyl oder Tolyl (vgl. EP 277 003, EP 277 004 und EP 426 638).

Bei Verwendung der obengenannten Cokatalysatoren besteht der eigentliche (aktive) Polymerisationskatalysator aus dem Reaktionsprodukt von Metallocen und einer der genannten Verbindungen. Daher wird zunächst dieses Reaktionsprodukt bevorzugt außerhalb des Polymerisationsreaktors in einem separaten Schritt unter Verwendung eines geeigneten Lösemittels hergestellt.

Prinzipiell ist als Cokatalysator erfindungsgemäß jede Verbindung geeignet, die aufgrund ihrer Lewis-Acidität das neutrale Metallocen in ein Kation überführen und dieses stabilisieren kann ("labile Koordination"). Darüberhinaus soll der Cokatalysator oder das aus ihm gebildete Anion keine weiteren Reaktionen mit dem gebildeten Metallocenkation eingehen (vgl. EP 427 697).

Mit Hilfe des Metallocens kann eine Vorpolymerisation erfolgen. Zur Vorpolymerisation wird bevorzugt das (oder eines der) in der Polymerisation eingesetzte(n) Olefin(e) verwendet.

Der in dem erfindungsgemäßen Verfahren eingesetzte Katalysator ist bevorzugt geträgert. Durch die Trägerung läßt sich beispielsweise die Kornmorphologie des hergestellten Polyolefins steuern. Dabei kann die Metallocenverbindung zunächst mit dem Träger und anschließend mit dem Cokatalysator umgesetzt werden. Es kann auch zunächst der Cokatalysator geträgert werden und anschließend mit der Metallocenverbindung umgesetzt werden. Auch ist es möglich das Reaktionsprodukt von Metallocenverbindung und Cokatalysator zu trägern. Geeignete Trägermaterialien sind beispielsweise Silikagele` Aluminiumoxide, festes Aluminoxan oder andere anorganische und organische Trägermaterialien wie beispielsweise Magnesiumchlorid. Ein geeignetes Trägermaterial ist auch ein Polyolefinpulver in feinverteilter Form.

Geeignete Trägermaterialien sind anorganische Oxide` Carbonate wie Kreide, Silikate wie Talk und Polymere mit Hydroxylgruppen an der Oberfläche. Besonders geeignete Träger sind poröse Oxide oder Mischoxide des Siliciums und/oder Aluminiums, die eine spezifische Oberfläche von 50 bis 1000 m²/g, vorzugsweise von 100 bis 800, insbesondere von 150 bis 650, aufweisen und deren Porenvolumen im Bereich von 0,2 bis 3, vorzugsweise 0,4 bis 3, insbesondere von 0,6 bis 2,7 cm³/g, liegt. Die Teilchengröße beträgt 1 bis 500 µm, vorzugsweise 10 bis 200 µm, insbesondere 20 bis 100 µm. Die Hydroxylgruppenzahl liegt, je nach der spezifischen Oberfläche und der Temperaturvorbehandlung im Bereich von 0,5 bis 50 mmol, vorzugsweise von 1 bis 20, insbesondere von 1,5 bis 10 mmol Hydroxylgruppen pro Gramm Träger. Solche Oxide werden teilweise speziell im Hinblick auf eine Verwendung als Träger für Trägerkatalysatoren hergestellt und sind im Handel erhältlich. Geeignete Trägermaterialien sind auch organische Verbindungen und Polymere, die Hydroxylgruppen tragen, wie z.B. Polysaccharide, Polyvinylalkohol und Cyclodextrin.

Vor der Umsetzung des Trägers mit der Metallocen-Verbindung muß durch Trocknen bei einer Temperatur von 120 bis 800°C, vorzugsweise 200 bis 500°C, adsorptiv gebundenes Wasser entfernt werden, was 1 bis 10 Stunden dauern kann. Die Trocknung wird durch Titration des OH-Gehaltes des Trägermaterials mit n-Butylmagnesiumchlorid analytisch verfolgt. Nach der Trocknung wird der Träger unter Luft- und Wasserausschluß unter einem Inertgas, beispielsweise Stickstoff oder Argon gelagert.

Die Umsetzung des Trägers mit der Metallocen-Verbindung kann in der Weise erfolgen, daß man den Träger in dem inerten Lösemittel suspendiert, die gelöste Metallocen-Verbindung bei einer Temperatur von 0 bis 80°C, vorzugsweise 15 bis 55°C, 1 bis 1260 min, vorzugsweise 20 bis 180 min einwirken läßt. Das Verhältnis von Metallocen-Verbindung zu Träger wird in Abhängigkeit vom Hydroxylgruppengehalt so gewählt, daß 0,01 bis 400, vorzugsweise 0,02 bis 10 mmol Metallocen-Verbindung pro Gramm Träger eingesetzt werden. Zur Neutralisation der entstehenden Säure werden 0,01 bis 400 mmol/g einer Base, bevorzugt 20 bis 25 mmol Dimethylanilin zugegeben.

Als Lösemittel für die Trägerung eignen sich Lösemittel, so z.B. aliphatische oder cycloaliphatische Kohlenwasserstoffe, beispielsweise Pentan, Hexan, Heptan, Cyclohexan, Methylcyclohexan, aromatische Kohlenwasserstoffe wie Benzol, Toluol, Xylol, Benzin- bzw. hydrierte Dieselölfraktionen oder Ether wie Diethylether und THF, welche sorgfältig von Sauerstoff, Schwefelverbindungen und Feuchtigkeit befreit worden sind. Bevorzugt werden aliphatische und cycloaliphatische Kohlenwasserstoffe verwendet.

Nach Ablauf der Reaktionszeit wird die überstehende Lösung abgetrennt, beispielsweise durch Filtration oder Dekantieren. Der zurückbleibende Feststoff wird 1- bis 5- mal mit einem inerten Suspensionsmittel wie Toluol, n-Decan, Hexan, Dieselöl, Dichlormethan zur Entfernung löslicher Bestandteile im gebildeten Katalysator, insbesondere zur Entfernung von nicht umgesetzten und damit löslichem Metallocen, gewaschen.

Das so hergestellte geträgerte Katalysatorsystem kann im Vakuum getrocknet als Pulver oder noch mit Lösemittel behaftet wieder resuspendiert und als Suspension in einem der vorgenannten inerten Suspensionsmittel in das Polymerisationssystem eindosiert werden.

Zur Entfernung von im Olefin vorhandenen Katalysatorgiften ist eine Reinigung mit einem Aluminiumalkyl, beispielsweise Trimethylaluminium, Triethylaluminium oder Triisobutylaluminium vorteilhaft. Diese Reinigung kann sowohl im Polymerisationssystem selbst erfolgen, oder das Olefin wird vor der Zugabe in das Polymerisationssystem mit der Al-Verbindung in Kontakt gebracht und anschließend wieder abgetrennt.

Als Molmassenregler und/oder zur Steigerung der Aktivität wird, falls erforderlich, Wasserstoff zugegeben. Der Gesamtdruck im Polymerisationssystem beträgt 0,5 bis 100 bar. Bevorzugt ist die Polymerisation in dem technisch besonders interessanten Druckbereich von 5 bis 64 bar.

Dabei wird das Metallocen in einer Konzentration, bezogen auf das Übergangsmetall von 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet. Das Aluminoxan wird in einer Konzentration von 10⁻⁵ bis 10⁻¹ mol, vorzugsweise 10⁻⁴ bis 10⁻² mol pro dm³ Lösemittel bzw. pro dm³ Reaktorvolumen verwendet. Die anderen genannten Cokatalysatoren werden in etwa äquimolaren Mengen zum Metallocen verwendet. Prinzipiell sind aber auch höhere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Propan, Butan, Hexan, Heptan, Isooctan, Cyclohexan, Methylcyclohexan, genannt. Weiterhin kann eine Benzin- bzw. eine hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Vor der Zugabe des Katalysators, insbesondere des geträgerten Katalysatorsystems kann zusätzlich eine andere Aluminiumalkylverbindung wie beispielsweise Trimethylaluminium, Triethylaluminium, Triisobutylaluminium, Trioctylaluminium oder Isoprenylaluminium zur Inertisierung des Polymerisationssystems (beispielsweise zur Abtrennung vorhander Katalysatorgifte im Olefin, Scavenger) in den Reaktor gegeben werden. Diese wird in einer Konzentration von 100 bis 0,01 mmol Al pro kg Reaktorinhalt dem Polymerisationssystem zugesetzt. Bevorzugt werden Triisobutylaluminium und Triethylaluminium in einer Konzentration von 10 bis 0,1 mmol Al pro kg Reaktorinhalt. Dadurch kann bei der Synthese eines geträgerten Katalysatorsystems das molare Al/M¹-Verhältnis klein gewählt werden.

Die erfindungsgemäßen Metallocene eignen sich insbesondere als Katalysatorkomponente zur Herstellung von Polyolefinen.

Die erfindungsgemäßen Metallocene zeichnen sich außerdem durch ein verbessertes Trägerverhalten aus und eignen sich zur Vermeidung von Reaktorbelägen.

Die nachfolgenden Beispiele sollen die Erfindung näher erläutern:

### Beispiel 1

### Herstellung von (4-Trichlorsilyl-n-butyl)(methyl)silandiyl[bis](2-methylindenyl)]zirconiumchlorid

Zu einer Lösung von 0,52 g (1 mmol) (3-Butenyl)(methyl)silandiyl[bis](2-methylindenyl)]zirconiumdichlorid in 5 ml Toluol wurden 0,4 g (3 mmol)Trichlorsilan und 10 mg H₂PtCl₆ x 6H₂O gegeben. Nach 24 h Rühren bei Raumtemperatur wurde das überschüssige Trichlorsilan und das Toluol im Ölpumpenvakuum entfernt. Man erhält 0,69 g eines Öles, das im ¹H-NMR-Spektrum keine Resonanzsignale der Vinylprotonen mehr zeigt.

### Beispiel 2

### Herstellung von Dimethylsilandiyl[(2-methylindenyl)(2-(4'-trichlorsilan-n-butyl)indenyl)]zirconiumdichlorid

Analog Beispiel 1 wurden 0,52 g (1 mmol) Dimethylsilandiyl[(2-methylindenyl)(2-(3'-butenyl)indenyl)]zirkoniumdichlorid mit 0,25 g (1,8 mmol) Trichlorsilan und 7 mg H₂PtCl₆ x 6H₂O umgesetzt. Man erhält 0,66 g eines Öles, das im ¹H-NMR-Spektrum keine Resonanzsignale der Vinylprotonen mehr zeigt.

### Beispiel 3

### Herstellung von Cyclopentadienyl[(dimethylchlorsilyl-n-butyl-dimethylsilyl)-cyclopentadienyl]-zirconiumdichlorid

Analog Beispiel 1 wurden 0,8 g (2 mmol) Cyclopentadienyl[3'-butenyl-dimethylsilyl)-cyclopentadienyl]-zirconiumdichlorid mit 0,4 g (4 mmol) Dimethylchlorsilan und 10 mg H₂PtCl₆ x 6H₂O umgesetzt. Man erhält 1,1 g eines Öles, das im ¹H-NMR-Spektrum keine Resonanzsignale der Vinylprotonen mehr zeigt.

### Beispiel 4

Analog zu Beispiel 1 wurden 0,6 g (1,2 mmol) Bis[cyclopentadienyl(2'-propenyl-dimethylslyl)]zirkoniumdichlorid mit 0,5 g (3,7 mmol) Trichlorsilan und 4 mg H₂PtCl₆·6H₂O umgesetzt. Nach 24 Stunden Rühren bei Raumtemperatur wurde das überschüssige Silan und das Toluol im Vakuum entfernt und es wurden 0,9 g eines Öles gewonnen, dessen ¹H-NMR zeigte, daß die Vinylgruppen der Ausgangsverbindung zu etwa 75 % hydrosilyliert wurden.

### Beispiel 5

3 g Siliciumdioxid (1,86 mmol OH-Gruppen/g) wurden in 30 ml Toluol und 1,1 mmol Dimethylanilin suspendiert. Bei 0°C werden 836 mg (1,1 mmol) [Cl₃Si(CH₂)₃Me₂SiCp)]₂ZrCl₂ gelöst in 30 ml Toluol zugegeben. Der Ansatz wird weitere 10 h bei 50°C gerührt. Der Feststoff wird abfiltriert, zweimal mit jeweils 15 ml Diethylether, zweimal mit jeweils 20 ml Toluol gewaschen und im Vakuum getrocknet. Zr-Gehalt: 0,3 mmol/g.

### Beispiel 6

In einem 1 l-Polymerisationsautoklav wurden nacheinander eine Suspension von 100 mg (0,03 mmol Zr) der Katalysatorkomponente aus Beispiel 4 in 4 ml einer toluolischen Methylaluminoxanlösung (6 mmol Aluminium) und 700 ml Butan gegeben. Anschließend wurden 4 bar Ethylen bis zu einem Enddruck von 4 bar eingeleitet und 1 Stunde polymerisiert. Man erhält 65,3 g Polyethylen mit einem Schüttgewicht von 333 g/l.

## Patentansprüche

1. Metallocenverbindung der Formel I 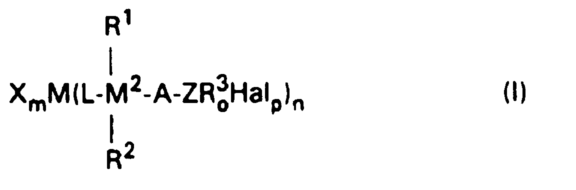 ,worin
M ein Metall der Gruppe IVb, Vb oder VIb des Periodensystems der Elemente ist,
X gleich oder verschieden sind und ein Wasserstoffatom, ein Halogenatom oder einen C₁-C₄₀-kohlenstoffhaltigen Rest bedeuten,
m gleich 1, 2 oder 3 ist,
n gleich 1 oder 2 ist,
L gleich oder verschieden ein π-Ligand sind, der an das Zentralatom M koordiniert,
M² gleich oder verschiedene in Siliciumatom, ein Germaniumatom oder ein Zinnatom sind,
R¹ gleich oder verschieden ein C₁-C₂₀-kohlenstoffhaltiger Rest sind,
R² gleich oder verschieden ein C₁-C₂₀-kohlenstoffhaltiger Rest sind, oder ein π-Ligand ist, der an das Zentralatom M koordiniert,
A gleich oder verschieden eine zweizähnige C₁-C₄₀-Kohlenwasserstoffgruppe sind,
Z gleich oder verschieden ein Boratom, ein Siliciumatom, ein Germaniumatom oder ein Zinnatom sind,
R³ gleich oder verschieden ein Wasserstoffatom oder ein C₁-C₂₀-kohlenstoffhaltiger Rest sind,
o gleich Null, 1 oder 2 ist,
Hal gleich oder verschieden ein Halogenatom ist, und
p gleich 1, 2 oder 3 ist,
wobei falls R² ein π-Ligand ist, der an das Zentralatom M koordiniert, n gleich 1 ist und falls R² ein C₁-C₂₀-kohlenstoffhaltiger Rest ist, n gleich 2 ist.

2. Katalysatorkomponente, enthaltend mindestens eine Metallocenverbindung der Formel I gemäß Anspruch 1 und mindestens einen Cokatalysator.

3. Geträgerter Katalysator, enthaltend eine Katalysatorkomponente gemäß Anspruch 2 und einen Träger.

4. Verfahren zur Herstellung eines Olefinpolymers durch Polymerisation eines oder mehrerer Olefine in Gegenwart einer Metallocenverbindung der Formel I gemäß Anspruch 1.

5. Verwendung einer Metallocenverbindung der Formel I gemäß Anspruch 1 zur Olefinpolymerisation.
